# EUROPEAN PATENT SPECIFICATION

(11) **EP 4 358 285 B1**
(45) Date of publication and mention of the grant of the patent: **08.07.2026**
(21) Application number: 22890286.2
(22) Date of filing: 28.10.2022
(51) Int. Cl.: H01M 50/204, H01M 50/211, H01M 50/209, H01M 50/213, H01M 50/227, H01M 50/24, H01M 50/60

(54) **BATTERY MODULE HAVING FUNCTION OF PREVENTING LEAKAGE OF POTTING RESIN AND BATTERY PACK INCLUDING SAME**
BATTERIEMODUL MIT FUNKTION ZUR VERHINDERUNG DES AUSLAUFENS VON GIESSHARZ UND BATTERIEPACK DAMIT
MODULE DE BATTERIE À FONCTION ANTIFUITE DE RÉSINE D'ENROBAGE ET BLOC-BATTERIE LE COMPRENANT

(30) Priority: 08.11.2021 KR 20210152198; 13.10.2022 KR 20220131070
(43) Date of publication of application: 24.04.2024
(73) Proprietor: LG Energy Solution, Ltd., Seoul 07335 (KR)
(72) Inventor: JEON, Byeong Jun, Daejeon 34122 (KR); BAE, Mun Jun, Daejeon 34122 (KR); SON, Young Su, Daejeon 34122 (KR)
(74) Representative: Plasseraud IP
(86) International application number: PCT/KR2022/016660
(87) International publication number: WO 2023/080551

(56) References cited:
- WO-A1-2019/021880
- WO-A1-2021/252597
- WO-A2-2021/083703
- CN-A- 104 993 187
- CN-B- 106 803 557
- US-A1- 2014 377 623

## Description

### [Technical Field]

This application claims the benefit of priority to Korean Patent Application No. 2021-0152198 filed on November 8, 2021 and Korean Patent Application No. 2022-0131070 filed on October 13, 2022.

The present invention relates to a battery module having a potting resin leakage prevention function and a battery pack including the same, and more particularly to a battery module having a potting resin leakage prevention function configured such that a potting resin can be rapidly injected without leakage thereof out of a case when the potting resin is injected and a process of manufacturing the battery module is simplified and a battery pack including the same.

### [Background Art]

CN 104 993 187 A discloses a mean-temperature method of cylindrical battery.
With recent development of alternative energies due to air pollution and energy depletion caused as the result of use of fossil fuels, demand for secondary batteries capable of storing electrical energy that is produced has increased. Secondary batteries, which are capable of being charged and discharged, are widely used in various fields, such as mobile devices, electric vehicles, hybrid electric vehicles, and industrial robots.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

In general, a battery module has a structure in which a plurality of battery cells is received in a case configured to be divided into an upper part and a lower part, whereby the battery cells are protected from external impact and permeation of moisture or introduction of various kinds of foreign matter thereinto are prevented.

Meanwhile, since fire breaks out in a battery cell due to external impact, such as overheating or overcurrent of the battery cell, the importance of safety has increasingly increased. In order to control a thermal runaway or thermal transfer phenomenon that may occur at the time of chain ignition, therefore, research on technology for potting the vicinity of the battery cell with a silicone liquid has been conducted.

If the viscosity of a potting resin is low, however, the potting resin may leak through a gap in the module case, which may cause another problem.

### (Prior Art Document)

(Patent Document 1) Korean Patent Application Publication No. 2021-0067663 (published on June 8, 2021)

### [Disclosure]

### [Technical Problem]

The present invention has been made in view of the above problems, and it is an object of the present invention to provide a battery module configured to have a structure in which a potting resin does not leak out of a case even though the viscosity of the potting resin is low.

It is another object of the present invention to provide a battery module configured such that a process of manufacturing the battery module is simplified.

It is a further object of the present invention to provide a battery module configured to have a structure in which, when a potting resin is injected into a case, the potting resin can rapidly and uniformly move to respective battery cells.

### [Technical Solution]

In order to accomplish the above objects, a battery module according to the present invention includes a plurality of battery cells (B), an upper case (100) including a plurality of first side plates (110) and an upper plate (120) connected to upper ends of the first side plates (110), the upper case being configured to receive upper parts of the battery cells (B), and a lower case (200) including a plurality of second side plates (210) and a lower plate (220) connected to lower ends of the second side plates (210), the lower case being configured to receive lower parts of the battery cells (B), wherein the upper plate (120) has a plurality of through-holes.

Also, in the battery module according to the present invention, the through-holes include a first through-hole (121) configured to expose one end of the battery cell (B) to an outside therethrough while encompassing an upper part of the battery cell, a second through-hole (122) configured to allow a potting resin to be injected therethrough, and a third through-hole (123) configured to discharge air therethrough from the upper case (100) and the lower case (200) when the potting resin is filled.

Also, in the battery module according to the present invention, the first through-hole (121), the second through-hole (122), and the third through-hole (123) have sequentially decreasing sectional areas.

Also, in the battery module according to the present invention, the first through-hole (121) may include a first upper through-hole (121a) having a diameter less than the outer diameter of the battery cell (B) and a first lower through-hole (121b) having a diameter equal to or greater than the outer diameter of the battery cell (B), and a first space portion (S1) may be provided under the upper plate (120).

Also, in the battery module according to the present invention, the first side plate (110) may be provided at a lower end thereof with a first sealing member (111) protruding by a predetermined length.

Also, in the battery module according to the present invention, the first sealing member (111) may be integrally formed with the upper case (100) by dual injection molding.

Also, in the battery module according to the present invention, the lower plate (220) may have a fourth through-hole (221) configured to expose the other end of the battery cell (B) the outside therethrough while encompassing a lower part of the battery cell, and a second space portion (S2) may be provided in an upper part of the lower plate (220).

Also, in the battery module according to the present invention, a second sealing member (222) may be provided in a partial region of an inner surface of the fourth through-hole (221).

Also, in the battery module according to the present invention, the second sealing member (222) may be in tight contact with an outer circumferential surface of the lower part of the battery cell (B).

Also, in the battery module according to the present invention, the second sealing member (222) may be integrally formed with the lower case (200) by dual injection molding.

Also, in the battery module according to the present invention, the second sealing member (222) may be located so as to be depressed in the inner surface of the fourth through-hole (221).

Also, in the battery module according to the present invention, the second side plate (210) may be provided in an upper end thereof with a concave recess (211) configured to allow the first sealing member (111) to be seated therein.

Also, in the battery module according to the present invention, the second side plate (210) may be provided at the upper end thereof with a first sealing member protruding by a predetermined length, and the first side plate (110) may be provided in the lower end thereof with a concave recess configured to allow the first sealing member to be seated therein.

In addition, the present invention provides a battery pack including the battery module.

In addition, the present invention provides a device having the battery pack mounted therein.

### [Advantageous Effects]

As is apparent from the above description, a battery module having a potting resin leakage prevention function according to the present invention and a battery pack including the same have a merit in that a second sealing member is provided in an inner surface of a fourth through-hole of a lower case, whereby it is possible to prevent an injected resin from flowing down the case even though the viscosity of the injected resin is low.

In addition, the battery module having the potting resin leakage prevention function according to the present invention and the battery pack including the same have an advantage in that a first sealing member and a concave recess are provided at coupling portions of the lower case and an upper case, whereby it is possible to prevent the injected resin from leaking to a side surface of the case even though the viscosity of the injected resin is low.

In addition, the battery module having the potting resin leakage prevention function according to the present invention and the battery pack including the same have a merit in that the upper case is provided with a through-hole for air discharge, whereby the potting resin can easily flow into the case.

Furthermore, the battery module having the potting resin leakage prevention function according to the present invention and the battery pack including the same have an advantage in that the first sealing member and the second sealing member are integrally formed by dual injection molding, whereby it is possible to simplify a process of manufacturing the battery module.

### [Description of Drawings]

FIG. 1 is a perspective view of a battery module according to a preferred embodiment of the present invention.
FIG. 2 is a plan view of the battery module according to the preferred embodiment of the present invention.
FIG. 3 is a bottom perspective view of the battery module according to the preferred embodiment of the present invention.
FIG. 4 is a sectional perspective view taken along line A-A of FIG. 1.
FIG. 5 is a perspective view of FIG. 4 in the state in which no battery cell is mounted.
FIG. 6 is a perspective view illustrating the internal structure of an upper case of the battery module according to the preferred embodiment of the present invention.
FIG. 7 is a perspective view showing the state in which a battery cell is received in a lower case of the battery module according to the preferred embodiment of the present invention.
FIG. 8 is a perspective view illustrating the internal structure of the lower case of the battery module according to the preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, throughout the specification, an upper part and a lower part may be understood respectively as a lower part and an upper part or one side and the other side depending on installation directions.

Hereinafter, a battery module having a potting resin leakage prevention function according to the present invention and a battery pack including the same will be described with reference to the accompanying drawings.

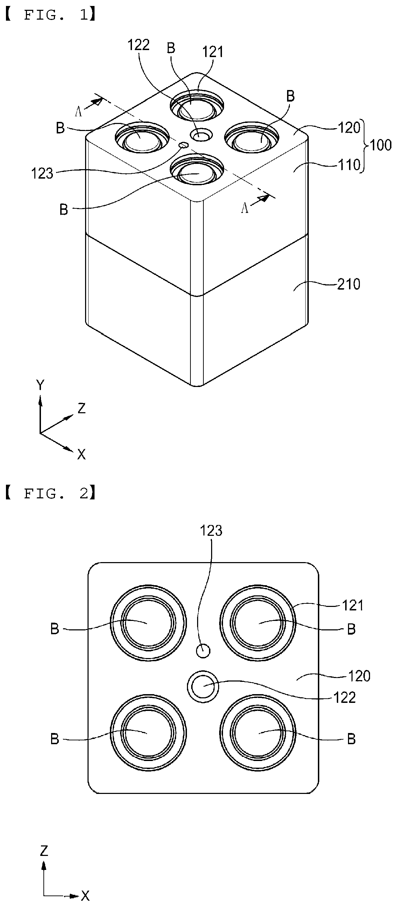

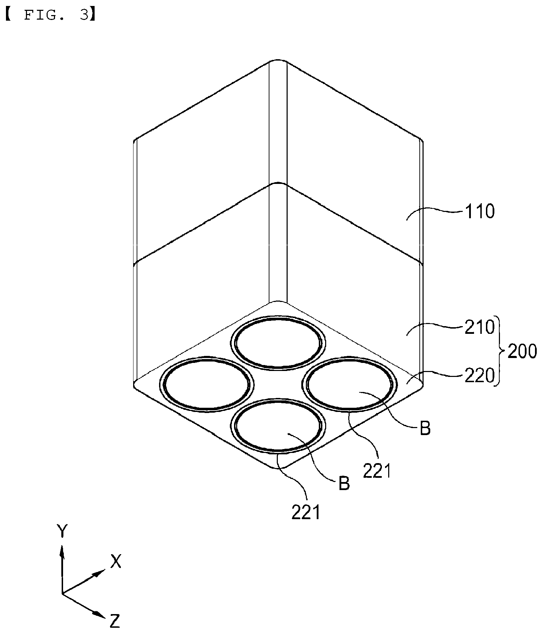

FIG. 1 is a perspective view of a battery module according to a preferred embodiment of the present invention, FIG. 2 is a plan view of the battery module according to the preferred embodiment of the present invention, and FIG. 3 is a bottom perspective view of the battery module according to the preferred embodiment of the present invention.

When describing the battery module according to the present invention with reference to FIGs. 1 to 3, the battery module includes a plurality of battery cells B and a case configured to receive the battery cells B, the case having an approximately hexahedral external shape.

Here, the battery cell B may be a cylindrical battery cell. Although four battery cells B are shown as being received in the drawings, which is merely an example, the number of battery cells may be increased or decreased.

Meanwhile, the cylindrical battery cell B includes an electrode assembly, an insulation member, a positive electrode lead wire, a cap assembly, and a battery can configured to receive the above components. The electrode assembly may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other. However, the present invention is not limited thereto.

In general, the positive electrode lead wire, which is attached to an upper end of the electrode assembly, is electrically connected to the cap assembly, and a negative electrode lead wire, which is attached to a lower end of the electrode assembly, is electrically connected to a bottom of the battery can. Meanwhile, the insulation member may be located at an upper part of the electrode assembly, and the insulation member serves to insulate between the electrode assembly and the cap assembly.

The cap assembly is located at an upper part of the insulation member so as to be electrically connected to the positive electrode lead wire attached to the upper end of the electrode assembly, and is coupled to an open end of an upper part of the battery can to hermetically seal the electrode assembly received in the battery can.

Specifically, the cap assembly may be configured such that a current cut-off member, a current cut-off gasket, a safety vent, and a top cap are sequentially stacked from the bottom, and a crimping gasket and a welding holder may be located at outer edges of the safety vent and the top cap.

The case may be constituted by an upper case 100 configured such that an upper part and a lower part are separable from each other and a lower case 200 located under the upper case 100. Specifically, the upper case 100, which is configured to receive a portion of an upper part of the battery cell B, is constituted by a plurality of first side plates 110 and an upper plate 120 configured to connect upper ends of the first side plates 110 to each other.

The upper plate 120 is provided with a plurality of through-holes, more specifically a first through-hole 121, a second through-hole 122, and a third through-hole 123. The first through-hole 121 is configured to allow the top cap of the battery cell B, which is one end of the battery cell, to be exposed to the outside therethrough while encompassing a portion of the upper part of the battery cell in order to support the portion of the upper part of the battery cell. Consequently, it is preferable for the first through-hole 121 to be formed in the same number as the battery cells B that are received.

The second through-hole 122 is a through-hole, through which a potting resin, with which the upper case 100 and the lower case 200 are filled in order to fix the battery cell B is injected. A plurality of second through-holes may be formed in consideration of the number of battery cells B to be received and the size of the battery module. When one second through-hole 122 is provided, however, it is preferable for the second through-hole to be located at the center of the upper case 100 such that the potting resin can move to outer surfaces of the battery cells B within as quickly as possible.

The third through-hole 123 is configured to guide the discharge of internal air when the potting resin is filled.

Here, the potting resin is configured to coat the vicinity of the battery cell in order to control a thermal runaway or thermal transfer phenomenon that may occur at the time of chain ignition of battery cells and to fix the case and the battery cell B to each other. As an example, the potting resin may be silicone having a phase change material (PCM) mixed therein.

Meanwhile, the first through-hole 121, the second through-hole 122, and the third through-hole 123 have sequentially decreasing sectional areas. That is, the first through-hole 121 is the largest and the third through-hole 123 is the smallest.

The lower case 200, which is located under the upper case (100) so as to be fixed to the upper case 100, is configured to receive a portion of a lower part of the battery cell B. Specifically, the lower case 200 may be constituted by a plurality of second side plates 210 and a lower plate 220 configured to connect lower ends of the second side plates 210 to each other, the lower plate being provided with a plurality of fourth through-holes 221.

Here, the fourth through-hole 221 is configured to allow the opposite side of the top cap of the battery cell B, i.e. the lower part of the battery cell B, to be exposed therethrough, and therefore it is preferable for the fourth through-hole 221 to be formed in the same number as the battery cells B that are received.

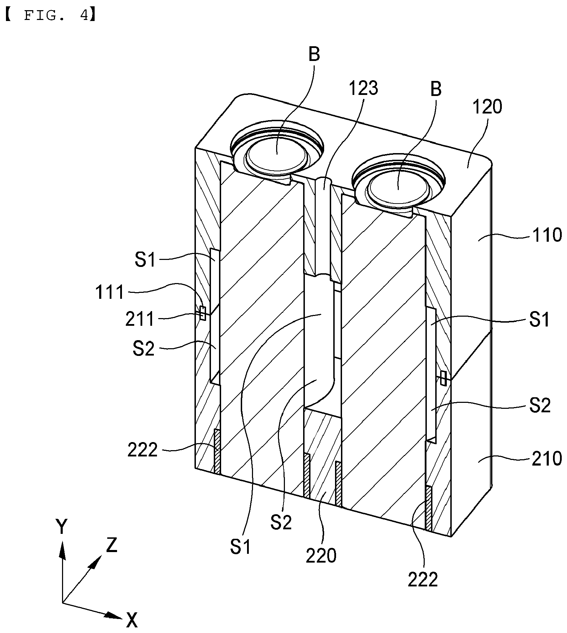

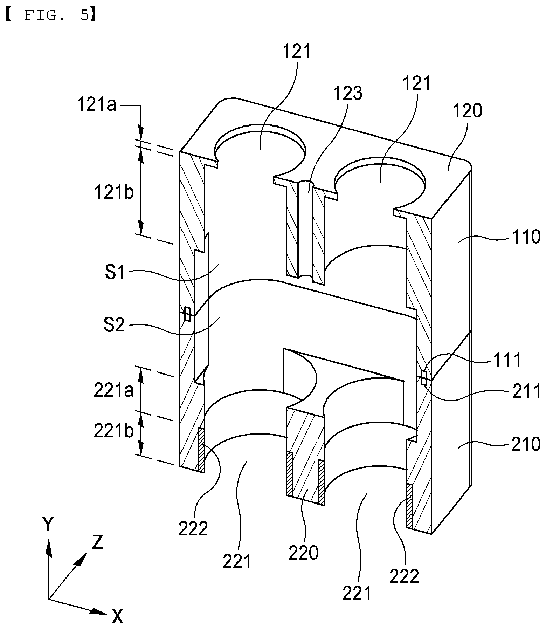

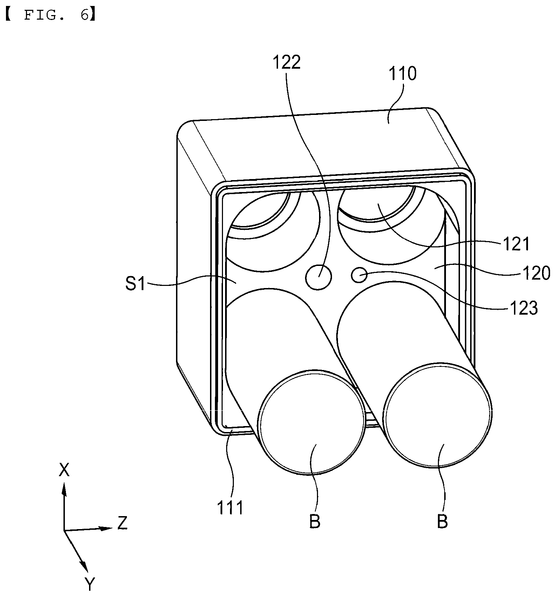

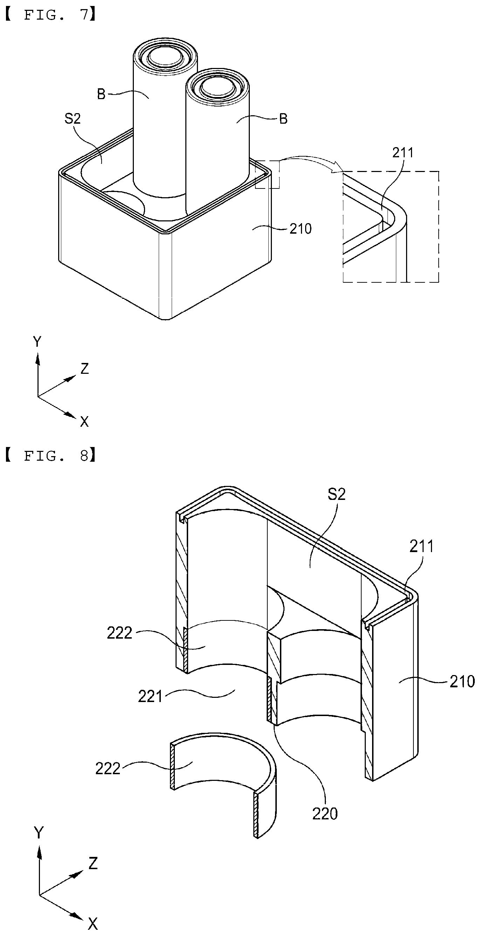

FIG. 4 is a sectional perspective view taken along line A-A of FIG. 1, FIG. 5 is a perspective view of FIG. 4 in the state in which no battery cell is mounted, and FIG. 6 is a perspective view illustrating the internal structure of the upper case of the battery module according to the preferred embodiment of the present invention. In addition, FIG. 7 is a perspective view showing the state in which the battery cell is received in the lower case of the battery module according to the preferred embodiment of the present invention, and FIG. 8 is a perspective view illustrating the internal structure of the lower case of the battery module according to the preferred embodiment of the present invention.

The upper case and lower case will be described in more detail with reference to FIGs. 4 to 8.

As previously described, the first through-hole 121, the second through-hole 122, and the third through-hole 123 are provided in the upper case 100. In addition, the upper case is provided with a first sealing member 111 and a first space portion S1.

Here, it is preferable for the first through-hole 121 to be constituted by a first upper through-hole 121a and a first lower through-hole 121b, a description of which will follow.

The first space portion S1 is located under the upper plate 120 of the upper case 100, more specifically under the first lower through-hole 121b, and the first space portion S1 is filled with a resin, whereby a partial region of the battery cell B is fixed.

Of course, the potting resin introduced into the first space portion S1 may move to a second space portion S2, a description of which will follow, and may fill a gap between an outer surface of the upper part of the battery cell B and an inner surface of the first lower through-hole 121b and a gap between the outer surface of the upper part of the battery cell B and an inner surface of a fourth upper through-hole 221a.

The first sealing member 111 may be provided along a lower end of the first side plate 110 of the upper case 100. Specifically, the first sealing member protrudes downwards by a predetermined length when viewed based on the upper case 100, and the material for the first sealing member is not particularly restricted as long as the material can function as a sealing member. For example, silicone or rubber may be used.

The first sealing member 111 is seated in a concave recess 211 of the lower case 200, a description of which will follow, in tight contact therewith in order to prevent the flow of the injected potting resin out to the outside when the battery cell B is fixed.

Here, although the upper case 100 and the first sealing member 111 may be separately manufactured and then the first sealing member 111 may be mounted to the upper case 100, it is advantageous to simultaneously manufacture the upper case 100 and the first sealing member 111 through dual injection molding in terms of coupling force or process simplification.

Meanwhile, as shown in FIGs. 4 and 5, it is preferable for the first through-hole 121 to be constituted by a first upper through-hole 121a having a diameter less than the outer diameter of the battery cell B and a first lower through-hole 121b located under the first upper through-hole 121a and having a diameter equal to or greater than the outer diameter of the battery cell B. The reason for this is that the top cap of the battery cell B can be exposed to the outside so as to be electrically connected to a busbar (not shown), etc. and protrusion of the battery cell B out of the upper case 100 through the first through-hole 121 can be securely prevented.

Next, the lower case 200 will be described in detail. The lower plate 220 of the lower case 200 is provided with a plurality of fourth through-holes 221 each having a diameter equal to or greater than the outer diameter of the battery cell B, and a second sealing member 222 is formed in a partial region of an inner surface of the fourth through-hole 221, a detailed description of which will follow.

Meanwhile, a second space portion S2, which is filled with the potting resin, is provided in an upper part of the lower plate 220 of the lower case 200. The second space portion S2 is filled with the potting resin that flows downwards via the first space portion S1. As a result, a partial region of the battery cell B is fixed.

The second sealing member 222 is located so as to be depressed in the inner surface of the fourth through-hole 221, whereby the second sealing member is in tight contact with a portion of an outer circumferential surface of the lower part of the battery cell B. Specifically, the fourth through-hole 221 may be constituted by a fourth upper through-hole 221a and a fourth lower through-hole 221b located under the fourth upper through-hole 221a. At this time, the second sealing member 222 may be located at a partial region or the entire region of the fourth lower through-hole 221b.

In general, the potting resin is used to fix the battery cell received in the case. At this time, when the viscosity of the resin that is injected is low, the resin may flow downwards through a gap between the battery cell and a support wall. As a result, a phenomenon in which the resin leaks out of the case may frequently occur.

In the present invention, however, the second sealing member 222 is provided in the inner surface of the fourth through-hole 221, and therefore it is possible to fundamentally prevent leakage of the injected potting resin through the fourth through-hole 221.

Here, although the second sealing member 222 may be formed as a single smooth flat surface, not protruding toward the inner surface of the fourth through-hole 221, it is more preferable for the second sealing member to protrude slightly farther than the inner surface of the fourth through-hole.

The reason for this is that it is advantageous to fix a portion of the outer circumferential surface of the lower part of the battery cell B using the second sealing member 222 in order to prevent the potting resin from flowing downwards and to fill the potting resin on the second sealing member 222 in order to fix the outer surface of the battery cell B and the inner surface of the fourth through-hole 221.

Although the lower case 200 and the second sealing member 222 may be separately manufactured and then the second sealing member 222 may be mounted to the lower case 200, it is advantageous to simultaneously manufacture the lower case 200 and the second sealing member 222 through dual injection molding in terms of coupling force or process simplification.

Meanwhile, a concave recess 211, in which the first sealing member 111 is seated, is formed in an upper end of the second side plate 210, and it is possible to reliably secure airtightness at the coupling region between the upper case 100 and the lower case 200 through the first sealing member 111 and the concave recess 211.

In the present invention, as described above, the first space portion S1 of the upper case 100 and the second space portion S2 of the lower case 200 are filled with the potting resin, whereby it is possible to securely fix the battery cell B and to reduce the weight of the battery module.

Although the structure in which the first sealing member 111 is provided at the upper case 100 and the concave recess 211, in which the first sealing member 111 is received, is provided in the lower case 200 is described with reference to FIGs. 1 to 8, it is obvious that the concave recess may be formed in the upper case 100 and the first sealing member may be provided at the lower case 200.

The present invention may provide a battery module having the cylindrical battery cell received therein. In addition, the battery module or a battery pack having the battery module received therein may be mounted in a device. For example, the device may be an electronic device including a large-capacity battery, such as an electric vehicle, a hybrid electric vehicle, or a plug-in hybrid electric vehicle.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible and the scope of protection is defined by the appended claims.

### (Description of Reference Symbols)

100: Upper case
110: First side plate 111: First sealing member
120: Upper plate
121: First through-hole
121a: First upper through-hole 121b: First lower through-hole
122: Second through-hole 123: Third through-hole
200: Lower case
210: Second side plate 211: Concave recess
220: Lower plate
221: Fourth through-hole
221a: Fourth upper through-hole 221b: Fourth lower through-hole
222: Second sealing member
B: Battery cell
S1: First space portion
S2: Second space portion

## Claims

1. A battery module comprising:
a plurality of battery cells (B);
an upper case (100) comprising a plurality of first side plates (110) and an upper plate (120) connected to upper ends of the first side plates (110), the upper case being configured to receive upper parts of the battery cells (B); and
a lower case (200) comprising a plurality of second side plates (210) and a lower plate (220) connected to lower ends of the second side plates (210), the lower case being configured to receive lower parts of the battery cells (B),
wherein the upper plate (120) has a plurality of through-holes, wherein the through-holes comprise:
a first through-hole (121) configured to expose one end of the battery cell (B) to an outside therethrough while encompassing an upper part of the battery cell;
**characterized in that** the through-holes comprise:
a second through-hole (122) configured to allow a potting resin to be injected therethrough; and
a third through-hole (123) configured to discharge air therethrough from the upper case (100) and the lower case (200) when the potting resin is filled, wherein the first through-hole (121) , the second through-hole (122), and the third through-hole (123) have sequentially decreasing sectional areas.

2. The battery module according to claim 1, wherein the first through-hole (121) comprises a first upper through-hole (121a) having a diameter less than an outer diameter of the battery cell (B) and a first lower through-hole (121b) having a diameter equal to or greater than the outer diameter of the battery cell (B), and
wherein a first space portion (S) is provided under the upper plate (120).

3. The battery module according to claim 2, wherein the first side plate (110) is provided at a lower end thereof with a first sealing member (111) protruding by a predetermined length.

4. The battery module according to claim 3, wherein the first sealing member (111) is integrally formed with the upper case (100) by dual injection molding.

5. The battery module according to claim 1, wherein the lower plate (220) has a fourth through-hole (221) configured to expose the other end of the battery cell (B) to the outside therethrough while encompassing a lower part of the battery cell, and
wherein a second space portion (S2) is provided in an upper part of the lower plate (220).

6. The battery module according to claim 5, wherein a second sealing member (220) is provided in a partial region of an inner surface of the fourth through-hole (221).

7. The battery module according to claim 6, wherein the second sealing member (222) is in tight contact with an outer circumferential surface of the lower part of the battery cell (B).

8. The battery module according to claim 7, wherein the second sealing member (222) is integrally formed with the lower case by dual injection molding.

9. The battery module according to claim 6, wherein the second sealing member (222) is located so as to be depressed in the inner surface of the fourth through-hole (221).

10. The battery module according to claim 3, wherein the second side plate (210) is provided in an upper end thereof with a concave recess (211) configured to allow the first sealing member (111) to be seated therein.

11. The battery module according to claim 1, wherein the second side plate (210) is provided at an upper end thereof with a first sealing member (111) protruding by a predetermined length, and
wherein the first side plate (110) is provided in a lower end thereof with a concave recess configured to allow the first sealing member to be seated therein.

12. A battery pack comprising the battery module according to any one of claims 1 to 11.

13. A device having the battery pack according to claim 12 mounted therein.

## Patentansprüche

1. Batteriemodul, umfassend:
eine Vielzahl von Batteriezellen (B);
ein oberes Gehäuse (100), das eine Vielzahl von ersten Seitenplatten (110) und eine obere Platte (120) umfasst, die mit oberen Enden der ersten Seitenplatten (110) verbunden ist, wobei das obere Gehäuse so konfiguriert ist, dass es obere Teile der Batteriezellen (B) aufnimmt; und
ein unteres Gehäuse (200), das eine Vielzahl von zweiten Seitenplatten (210) und eine untere Platte (220) umfasst, die mit unteren Enden der zweiten Seitenplatten (210) verbunden ist, wobei das untere Gehäuse so konfiguriert ist, dass es untere Teile der Batteriezellen (B) aufnimmt,
wobei die obere Platte (120) eine Vielzahl von Durchgangslöchern aufweist, wobei die Durchgangslöcher umfassen:
ein erstes Durchgangsloch (121), das so konfiguriert ist, dass es ein Ende der Batteriezelle (B) nach außen hindurch freilegt, während es einen oberen Teil der Batteriezelle umschließt;
**dadurch gekennzeichnet, dass** die Durchgangslöcher umfassen:
ein zweites Durchgangsloch (122), das so konfiguriert ist, dass es das Einspritzen einer Vergussmasse hindurch ermöglicht; und
ein drittes Durchgangsloch (123), das so konfiguriert ist, dass es Luft aus dem oberen Gehäuse (100) und dem unteren Gehäuse (200) ablässt, wenn die Vergussmasse eingefüllt wird, wobei das erste Durchgangsloch (121), das zweite Durchgangsloch (122) und das dritte Durchgangsloch (123) sequentiell abnehmende Querschnittsflächen aufweisen.

2. Batteriemodul nach Anspruch 1, wobei das erste Durchgangsloch (121) ein erstes oberes Durchgangsloch (121a) mit einem Durchmesser, der kleiner als ein Außendurchmesser der Batteriezelle (B) ist, und ein erstes unteres Durchgangsloch (121b) mit einem Durchmesser, der gleich oder größer als der Außendurchmesser der Batteriezelle (B) ist, umfasst, und wobei ein erster Raumbereich (S) unter der oberen Platte (120) vorgesehen ist.

3. Batteriemodul nach Anspruch 2, wobei die erste Seitenplatte (110) an einem unteren Ende davon mit einem ersten Dichtungselement (111) versehen ist, das um eine vorbestimmte Länge vorsteht.

4. Batteriemodul nach Anspruch 3, wobei das erste Dichtungselement (111) durch Zweikomponentenspritzguss einstückig mit dem oberen Gehäuse (100) ausgebildet ist.

5. Batteriemodul nach Anspruch 1, wobei die untere Platte (220) ein viertes Durchgangsloch (221) aufweist, das so konfiguriert ist, dass es das andere Ende der Batteriezelle (B) nach außen hindurch freilegt, während es einen unteren Teil der Batteriezelle umschließt, und wobei ein zweiter Raumbereich (S2) in einem oberen Teil der unteren Platte (220) vorgesehen ist.

6. Batteriemodul nach Anspruch 5, wobei ein zweites Dichtungselement (220) in einem Teilbereich einer Innenfläche des vierten Durchgangslochs (221) vorgesehen ist.

7. Batteriemodul nach Anspruch 6, wobei das zweite Dichtungselement (222) in engem Kontakt mit einer Außenumfangsfläche des unteren Teils der Batteriezelle (B) steht.

8. Batteriemodul nach Anspruch 7, wobei das zweite Dichtungselement (222) durch Zweikomponentenspritzguss einstückig mit dem unteren Gehäuse ausgebildet ist.

9. Batteriemodul nach Anspruch 6, wobei das zweite Dichtungselement (222) so angeordnet ist, dass es in der Innenfläche des vierten Durchgangslochs (221) vertieft ist.

10. Batteriemodul nach Anspruch 3, wobei die zweite Seitenplatte (210) in einem oberen Ende davon mit einer konkaven Ausnehmung (211) versehen ist, die so konfiguriert ist, dass das erste Dichtungselement (111) darin aufgenommen werden kann.

11. Batteriemodul nach Anspruch 1, wobei die zweite Seitenplatte (210) an einem oberen Ende davon mit einem ersten Dichtungselement (111) versehen ist, das um eine vorbestimmte Länge vorsteht, und
wobei die erste Seitenplatte (110) in einem unteren Ende davon mit einer konkaven Ausnehmung versehen ist, die so konfiguriert ist, dass das erste Dichtungselement darin aufgenommen werden kann.

12. Batteriepack, umfassend das Batteriemodul nach einem der Ansprüche 1 bis 11.

13. Vorrichtung mit dem darin montierten Batteriepack nach Anspruch 12.

## Revendications

1. Module de batterie comprenant :
une pluralité de cellules de batterie (B) ;
un boîtier supérieur (100) comprenant une pluralité de premières plaques latérales (110) et une plaque supérieure (120) reliée aux extrémités supérieures des premières plaques latérales (110), le boîtier supérieur étant configuré pour recevoir des parties supérieures des cellules de batterie (B) ; et
un boîtier inférieur (200) comprenant une pluralité de secondes plaques latérales (210) et une plaque inférieure (220) reliée aux extrémités inférieures des secondes plaques latérales (210), le boîtier inférieur étant configuré pour recevoir des parties inférieures des cellules de batterie (B),
dans lequel la plaque supérieure (120) présente une pluralité de trous traversants, dans lequel les trous traversants comprennent :
un premier trou traversant (121) configuré pour exposer une extrémité de la cellule de batterie (B) vers un extérieur à travers celui-ci tout en entourant une partie supérieure de la cellule de batterie ;
**caractérisé en ce que** les trous traversants comprennent :
un deuxième trou traversant (122) configuré pour permettre à une résine d'enrobage d'être injectée à travers celui-ci ; et
un troisième trou traversant (123) configuré pour évacuer l'air à travers celui-ci du boîtier supérieur (100) et du boîtier inférieur (200) lorsque la résine d'enrobage est remplie, dans lequel le premier trou traversant (121), le deuxième trou traversant (122) et le troisième trou traversant (123) ont des aires de section séquentiellement décroissantes.

2. Module de batterie selon la revendication 1, dans lequel le premier trou traversant (121) comprend un premier trou traversant supérieur (121a) ayant un diamètre inférieur à un diamètre extérieur de la cellule de batterie (B) et un premier trou traversant inférieur (121b) ayant un diamètre égal ou supérieur au diamètre extérieur de la cellule de batterie (B), et dans lequel une première partie d'espace (S) est prévue sous la plaque supérieure (120).

3. Module de batterie selon la revendication 2, dans lequel la première plaque latérale (110) est pourvue, à une extrémité inférieure de celle-ci, d'un premier élément d'étanchéité (111) faisant saillie sur une longueur prédéterminée.

4. Module de batterie selon la revendication 3, dans lequel le premier élément d'étanchéité (111) est formé d'une seule pièce avec le boîtier supérieur (100) par moulage par double injection.

5. Module de batterie selon la revendication 1, dans lequel la plaque inférieure (220) présente un quatrième trou traversant (221) configuré pour exposer l'autre extrémité de la cellule de batterie (B) à l'extérieur à travers celle-ci tout en entourant une partie inférieure de la cellule de batterie, et dans lequel une seconde partie d'espace (S2) est prévue dans une partie supérieure de la plaque inférieure (220).

6. Module de batterie selon la revendication 5, dans lequel un second élément d'étanchéité (220) est prévu dans une région partielle d'une surface intérieure du quatrième trou traversant (221).

7. Module de batterie selon la revendication 6, dans lequel le second élément d'étanchéité (222) est en contact étroit avec une surface circonférentielle extérieure de la partie inférieure de la cellule de batterie (B).

8. Module de batterie selon la revendication 7, dans lequel le second élément d'étanchéité (222) est formé d'une seule pièce avec le boîtier inférieur par moulage par double injection.

9. Module de batterie selon la revendication 6, dans lequel le second élément d'étanchéité (222) est situé de manière à être en retrait dans la surface intérieure du quatrième trou traversant (221).

10. Module de batterie selon la revendication 3, dans lequel la seconde plaque latérale (210) est pourvue à une extrémité supérieure de celle-ci d'un évidement concave (211) configuré pour permettre au premier élément d'étanchéité (111) d'y être logé.

11. Module de batterie selon la revendication 1, dans lequel la seconde plaque latérale (210) est pourvue au niveau d'une extrémité supérieure de celle-ci d'un premier élément d'étanchéité (111) faisant saillie sur une longueur prédéterminée, et
dans lequel la première plaque latérale (110) est pourvue à une extrémité inférieure de celle-ci d'un évidement concave configuré pour permettre au premier élément d'étanchéité d'y être logé.

12. Bloc-batterie comprenant le module de batterie selon l'une quelconque des revendications 1 à 11.

13. Dispositif comprenant le bloc-batterie selon la revendication 12 monté à l'intérieur.
